# FASCICULE DE BREVET EUROPEEN

(11) **EP 0 383 668 B1**
(45) Date de publication et mention de la délivrance du brevet: **15.06.1994**
(21) Numéro de dépôt: 90400378.7
(22) Date de dépôt: 13.02.1990
(51) Int. Cl.: B23K 35/22, B23K 26/14

(54) **Procédé de découpe au laser d'aciers au carbone**
Verfahren zum Laserstrahlschneiden von Kohlenstoffstahl
Method for laser cutting carbon steels

(30) Priorité: 14.02.1989 FR 8901868
(43) Date de publication de la demande: 22.08.1990
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Guillas, Christophe, F-95210 Saint Gratien (FR); Le Gall, Christian, F-95610 Eragny-sur-Oise (FR); Van der Have, Philippe - Liquid Air (PTY) Limited, 99 300-2193 Johannesbourg (ZA)
(74) Mandataire: Le Moenner, Gabriel

(56) Documents cités:
- DE-B- 1 814 375
- GB-A- 2 191 434
- PATENT ABSTRACTS OF JAPAN, vol. 12, no. 437 (M 765)[3284], 17 novembre 1988,page 82 M 765; & JP-A-63 171 289 (MITSUBISHI ELECTRIC CORP.) 15-07-1988
- PATENT ABSTRACTS OF JAPAN, vol. 8, no. 197 (M-324)[1634], 11 septembre 1984,page 153 M 324; & JP-A-59 87 996 (ISHIKAWAJIMA HARIMA JUKOGYO K.K.) 21-05-1984
- DVS BERICHTE, vol. 108, 1987, pages 76-82, Frankfurt/Main, DE; H. HIRSCHBERG:"Thermische Schneidverfahren - ihre Anwendung und Grenzen"
- SCHWEISSEN & SCHNEIDEN, vol. 41, no. 8,août 1989, pages 379-382, Düsseldorf, DE; G. BRODEN et al.: "Einfluss derReinheit des Schneidsauerstoffs beim Laserstahlbrennschneiden"

## Description

La présente invention est relative aux gaz utilisés pour la découpe au laser d'aciers au carbone.

La technique de découpe au laser s'apparente à l'oxycoupage, un faisceau laser et un jet d'oxygène étant envoyés simultanément sur la région à découper.

Il existe actuellement sur le marché deux qualités de gaz : les gaz dits "de qualité industrielle", dont la pureté garantie est généralement voisine de 99,5 %, et les gaz dits "de qualité scientifique", dont la pureté garantie est généralement 99,995 % ou plus.

Il est reconnu par les hommes de métier que l'oxygène de qualité industrielle n'est pas satisfaisant pour servir de gaz standard pour découper des pièces de diverses épaisseurs allant jusqu'à 8 mm. En effet, suivant l'épaisseur et la vitesse de coupe, on constate l'apparition de divers degrés d'imperfections du procédé : dégradation (évasement) du panache lumineux au verso de la coupe, apparition de bavures plus ou moins importantes, et même impossibilité de couper. C'est pourquoi les industriels, pour optimiser les performances de leurs équipements, n'ont d'autre choix que d'utiliser de l'oxygène de qualité scientifique, qui présente l'inconvénient d'être coûteux.

L'invention a pour but de fournir un procédé pour la découpe au laser des aciers au carbone qui assure de façon économique une coupe de qualité, c'est-à-dire dépourvue des défauts indiqués ci-dessus, ceci sans réduction de la vitesse de coupe utilisable avec l'oxygène de qualité scientifique.

A cet effet, le gaz suivant l'invention est constitué d'oxygène ayant une pureté d'au moins 99,8 % mais moins bonne que 99,995 %.

Lorsqu'il s'agit d'obtenir le même résultat pour tout type de découpe, y compris des découpes de forme, la pureté du gaz suivant l'invention est de préférence d'au moins 99,9 %.

La demanderesse a effectué des recherches extensives en découpant au laser des pièces d'acier au carbone de diverses épaisseurs allant de 2 à 8 mm et en introduisant dans de l'oxygène "pur", c'est-à-dire de qualité scientifique ayant une pureté d'au moins 99,995 %, des quantités croissantes (i) de la principale impureté normalement rencontrée en quantité non négligeable dans la production industrielle de l'oxygène, à savoir l'argon ; (ii) d'une autre impureté significative dans la production industrielle de l'oxygène mais qui peut surtout se retrouver au niveau de l'utilisateur par suite d'entrées d'air dans le système de distribution d'oxygène, à savoir l'azote ; et (iii) d'une impureté active, l'anhydride carbonique (CO₂), dont on pensait a priori qu'elle favoriserait la réaction d'oxy-combustion.

Ces recherches ont montré que, de façon inattendue, avec la vitesse de coupe utilisée habituellement avec de l'oxygène "pur" :
(a) en découpe rectiligne :
   - pour chacune des impuretés Ar, N₂ et CO₂, le seuil de dégradation de la coupe, concrétisé par la dégradation du panache au verso de la coupe, se situe à 2 000 ppm environ, quelle que soit l'épaisseur ;
   - au-dessous de 2 000 ppm d'impuretés (soit une pureté de l'oxygène de 99,8 %), on n'observe aucune amélioration de la qualité de la coupe. Ainsi, des découpes dépourvues de défauts, de même qualité qu'avec de l'oxygène de qualité scientifique, ont été réalisées sur des pièces de 2 à 8 mm, sans réduction de vitesse, avec de l'oxygène contenant 2 000 ppm d'argon, d'azote ou de CO₂.
(b) en découpe de forme, le seuil d'impuretés se situe aux environs de 1 000 ppm (soit une pureté de l'oxygène de 99,9 %). En d'autres termes, pour toutes les épaisseurs comprises entre 2 et 8 mm, aucune dégradation du panache n'apparaît pour cette teneur en impuretés. Une telle dégradation s'observe pour certaines épaisseurs au-delà de 1 000 ppm, et aucune amélioration n'est visible lorsque la pureté de l'oxygène est meilleure que 99,9 %. Ainsi, des découpes dépourvues de défauts, de même qualité qu'avec de l'oxygène de qualité scientifique, ont été réalisées sur des pièces de 2 à 8 mm, sans réduction de vitesse, avec de l'oxygène contenant 1 000 ppm d'argon, d'azote ou de CO₂.

Ces recherches ont mis en évidence que, de façon surprenante, il n'était pas nécessaire d'utiliser de l'oxygène de qualité scientifique pour découper au laser des pièces en acier au carbone, mais qu'il suffisait de respecter un seuil maximal d'impuretés gazeuses, de 2 000 ppm (soit 0,2 %) si l'on n'effectue que des découpes rectilignes et de 1 000 ppm (soit 0,1 %) pour les découpes de forme, pour assurer une qualité parfaite de coupe sans réduction de vitesse pour toute épaisseur allant jusqu'à 8 mm. A titre de comparaison, avec de l'oxygène de qualité industrielle à 99,5 % de pureté, l'obtention du même résultat nécessite une réduction de vitesse de l'ordre de 30 % au moins pour les faibles épaisseurs (jusqu'à 4 mm environ), tandis que pour les fortes épaisseurs, même en réduisant considérablement la vitesse, on ne parvient pas à obtenir une découpe sans défaut.

## Revendications

1. Procédé de découpe au laser d'acier au carbone, du genre où l'on met en oeuvre un faisceau laser et un jet d'oxygène de pureté, caractérisé en ce que la pureté de l'oxygène formant ledit jet est d'au moins 99,8% mais inférieure à 99,995%.

2. Procédé de découpe au laser d'acier au carbone selon la revendication 1, caractérisé en ce que, dans le cas de découpes dites de forme, la pureté de l'oxygène formant ledit jet est supérieure à 99,9 %.

## Patentansprüche

1. Verfahren zum Laserstrahlschneiden von Kohlenstoffstahl unter Anwendung eines Laserstrahls und eines Strahls reinen Sauerstoffs, dadurch gekennzeichnet, daß die Reinheit des den Strahl bildenden Sauerstoffs zumindest 99,8%, jedoch weniger als 99,995% beträgt.

2. Verfahren zum Laserstrahlschneiden von Kohlenstoffstahl nach Anspruch 1, dadurch gekennzeichnet, daß die Reinheit des den Strahl bildenden Sauerstoffs im Fall von Formschnitten höher als 99,9% ist.

## Claims

1. Method for the laser-cutting of carbon steel, of the type in which use is made of a laser beam and a jet of oxygen of purity, characterized in that the purity of the oxygen forming the said jet is at least 99.8% but less than 99.995%.

2. Method for the laser cutting of carbon steel according to Claim 1, characterized in that, in the case of cutting called shape cutting, the purity of the oxygen forming the said jet is greater than 99.9%.
